(19) Europäisches Patentamt European Patent Office Office européen des brevets

(11) **EP 4 001 375 B1**

(12) **FASCICULE DE BREVET EUROPEEN**

(45) Date de publication et mention de la délivrance du brevet:
**08.11.2023 Bulletin 2023/45**

(21) Numéro de dépôt: **21306222.7**

(22) Date de dépôt: **08.09.2021**

(51) Classification Internationale des Brevets (IPC):
**C09J 103/02** *(2006.01)* **C03C 25/321** *(2018.01)*
**C08K 5/053** *(2006.01)*

(52) Classification Coopérative des Brevets (CPC):
**C09J 103/02; C03C 25/321**

(54) **COMPOSITION DE LIANT À BASE D'INGRÉDIENTS BIOSOURCÉS ET SON UTILISATION POUR FORMER DES VOILES NON-TISSÉS DE FIBRES DE VERRE**

BINDEMITTELZUSAMMENSETZUNG AUF BASIS BIOBASIERTER INHALTSSTOFFE UND IHRE VERWENDUNG ZUR HERSTELLUNG VON GLASFASERVLIESEN

BINDER COMPOSITION BASED ON BIOSOURCED INGREDIENTS AND USE THEREOF FOR FORMING NON-WOVEN WALLS OF GLASS FIBRES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.11.2020 FR 2011924**

(43) Date de publication de la demande:
**25.05.2022 Bulletin 2022/21**

(73) Titulaire: **Saint-Gobain Adfors**
**92400 Courbevoie (FR)**

(72) Inventeur: **SIMONIN, Léo**
**75013 PARIS (FR)**

(74) Mandataire: **Saint-Gobain Recherche**
**Département Propriété Industrielle**
**39 Quai Lucien Lefranc**
**93300 Aubervilliers (FR)**

(56) Documents cités:
**WO-A1-2013/014399 US-A1- 2019 382 628**

**Description**

L'invention est relative à une nouvelle composition de liant à base d'ingrédients biosourcés permettant de lier des fibres minérales ou organiques et d'obtenir des voiles non-tissés. Elle concerne également un procédé de fabrication de voiles non-tissé utilisant une telle composition de liant et un voile obtenu par ce procédé.

Les mats de fibres minérales et/ou organiques (aussi appelés « intissés » ou « voiles ») peuvent être fabriqués selon les procédés connus opérant par voie sèche ou par voie humide.

Dans le procédé par voie sèche, de la matière fondue contenue dans un four est acheminée vers un ensemble de filières à partir desquelles des filaments s'écoulent par gravité et sont étirés par un flux gazeux. Les filaments sont récoltés sur un convoyeur où ils s'entremêlent en formant un mat ou voile non-tissé.

Sur la face supérieure du voile ainsi formé, on applique une composition de liant à l'aide d'un dispositif adapté, le plus souvent opérant par dépôt par rideau, et on élimine l'excès de composition de liant par aspiration au niveau de la face opposée. Le voile entre ensuite dans une étuve à air chaud dont la température est adaptée pour éliminer l'eau et réticuler la composition de liant en un temps assez court, puis le mat de fibres minérales est collecté et enroulé.

Dans le procédé par voie humide, le voile est obtenu à partir d'une dispersion aqueuse de fibres organiques ou minérales coupées qui est déposée au moyen d'une tête de formage sur un convoyeur muni de perforations et l'eau est extraite à travers le convoyeur grâce à un caisson d'aspiration. Les fibres coupées restant sur le convoyeur forment un voile qui est traité dans les mêmes conditions que celles décrites pour le procédé par voie sèche.

Dans les procédés précités, le liant a pour fonction de lier les fibres entre-elles et de conférer au voile obtenu des propriétés mécaniques adaptées à l'usage désiré, notamment une rigidité suffisante pour pouvoir être manipulé facilement sans risque notamment qu'il puisse être déchiré.

La composition de liant à appliquer sur les fibres organiques ou minérales se présente généralement sous la forme d'une solution aqueuse renfermant au moins une résine thermodurcissable et des additifs tels qu'un silane promoteur d'adhérence, un hydrofugeant, etc.

Depuis plus d'une dizaine d'années, les fabricants de produits d'isolation à base de laine minérale proposent des compositions de liant exemptes de formaldéhyde et presqu'exclusivement à base d'ingrédients biosourcés, en particulier à base d'hydrates de carbone, permettant de remplacer les résines phénol/formaldéhyde utilisées auparavant.

Il a ainsi été proposé de former des liants insolubles par réaction de Maillard entre des sucres réducteurs et une source d'azote, par exemple une amine (voir par exemple WO2007/014236 et WO2009/019232). Les produits obtenus ont généralement une couleur marron, attribuée aux mélanoïdines formées.

Des liants thermodurcissables de couleur plus claire, voire blanche, également à base d'ingrédients biosourcés et exempts de formaldéhyde, ont été proposés peu de temps après (voir par exemple WO2010/029266 et WO2013/014399). Ces liants sont basés sur la réaction entre des sucres hydrogénés (alditols) et l'acide citrique en présence d'un catalyseur, tels que l'hypophosphite de sodium (HPS).

La Demanderesse, lorsqu'elle a voulu utiliser ces liants à base de sucres hydrogénés et d'acide citrique pour fabriquer des voiles non-tissés en fibres minérales ou en fibres organiques, liées par des liants biosourcés exempts de formaldéhyde, a constaté que les produits obtenus avaient certes des propriétés mécaniques satisfaisantes lorsqu'ils étaient secs, mais que leur résistance mécanique, en particulier leur résistance en traction, était fortement dégradée à l'état humide.

Cela peut être particulièrement gênant lorsque le voile non-tissé est utilisé en tant que surfaçage ou en tant que couche support pour des produits complexes, tels que des produits d'isolation thermique à base de laine minérale, des membranes bitumineuses ou encore des plaques de plâtre. En effet, les procédés de fabrication de ces produits multicouches impliquent souvent la mise en contact des voiles non-tissés avec des matériaux contenant de l'eau, par exemple des émulsions bitumineuses, des compositions à base de liants hydrauliques ou encore des fibres de laine minérale fraîchement encollées, en même temps que l'application d'une force de traction indispensable pour le défilement du produit dans la chaîne de fabrication. Lorsque le voile non-tissé présente une résistance en traction à l'état humide insuffisante il peut se déchirer ce qui nécessitera alors l'arrêt de la chaîne de fabrication.

Après de nombreux essais visant à trouver des réactifs biosourcés permettant de renforcer le réseau polymérique du liant durci et à limiter en particulier la dégradation de la résistance en traction à l'état humide, la Demanderesse a constaté que l'ajout d'une quantité assez importante d'un polysaccharide de type amidon ou dextrine au système réactionnel alditols/acide citrique/HPS permettait d'améliorer significativement les propriétés mécaniques à l'état humide des voiles obtenus. Pour être efficace, l'amidon ou la dextrine doit avoir un poids moléculaire assez important (plusieurs centaines de milliers de daltons) tout en étant à l'état dissous, du moins majoritairement dissous, dans l'eau et par conséquent dans le milieu réactionnel (composition de liant). Des dextrines ayant des masses moléculaires de quelques milliers de daltons seulement se sont révélés inefficaces.

La présente invention a par conséquent pour objet une composition aqueuse de liant comprenant

- de 10 à 40 % en poids d'un sucre hydrogéné,

- de 25 à 55 % en poids d'acide citrique,
- de 25 à 50 % en poids d'un polysaccharide, dissous dans la composition aqueuse de liant, choisi dans groupe constitué des dextrines présentant une masse molaire moyenne en poids comprise entre 150 000 et 2 000 000 et une solubilité dans l'eau comprise entre 50 et 85 % et des amidons fonctionnalisés, et
- de 1 à 10 % en poids, de préférence de 2 à 6 % en poids d'hypophosphite de sodium ou d'acide hypophosphoreux,

ces pourcentages étant exprimés par rapport au poids sec total de la composition de liant.

Les compositions de liant de la présente invention sont des compositions thermodurcissables. La réaction de thermodurcissement s'effectue principalement entre l'acide citrique et le ou les sucres hydrogénés, en particulier les fonctions hydroxyle primaires de ces sucres hydrogénés, plus réactives en estérification que les groupes hydroxyle secondaires. Elle est catalysée par l'hypophosphite de sodium ou l'acide hypophosphoreux. Ce système réactif est connu et décrit par exemple dans les demandes internationales WO2010/029266 et WO2013/014399.

La Demanderesse a été surprise de constater que l'ajout à ce système réactionnel d'une quantité assez importante d'amidon ou de dextrine, pouvant aller jusqu'à environ 50 % en poids, se traduisait, non pas par un affaiblissement des propriétés mécaniques du liant durci suite à la « dilution » des groupes réactifs (hydroxyles primaires et carboxyles), mais au contraire par un renforcement mécanique du liant durci, en particulier à l'état humide. Ce renforcement mécanique n'était toutefois obtenu que lorsque la dextrine/l'amidon était de masse élevée et au moins partiellement soluble dans le milieu réactionnel. L'incorporation d'amidon natif, sous forme de grains non gélatinisés et non solubilisés, dans la composition de liant n'a pas permis d'améliorer la résistance en traction à l'état humide des voiles non-tissés.

On peut utiliser dans les compositions de liant thermodurcissables de la présente invention en principe n'importe quel sucre hydrogéné.

Par « sucre hydrogéné » on entend l'ensemble des produits résultant de la réduction d'un saccharide (hydrate de carbone) choisi parmi les monosaccharides, disaccharides, oligosaccharides et polysaccharides et des mélanges de ces produits. Les sucres hydrogénés sont également appelés alcools de sucres, alditols ou polyols. Ils peuvent être obtenus par hydrogénation catalytique de saccharides. L'hydrogénation peut être effectuée par des méthodes connues opérant dans des conditions de pression d'hydrogène et de température élevées, en présence d'un catalyseur choisi parmi les éléments des groupes IB, IIB, IVB, VI, VII et VIII du tableau périodique des éléments, de préférence dans le groupe comprenant le nickel, le platine, le palladium, le cobalt, le molybdène et leurs mélanges. Le catalyseur préféré est le nickel de Raney.

Le ou les sucres hydrogénés sont choisis avantageusement dans le groupe constitué de l'érythritol, l'arabitol, le xylitol, le sorbitol, le mannitol, l'iditol, le maltitol, l'isomaltitol, le lactitol, le cellobitol, le palatinitol, le maltotritol, et les produits d'hydrogénation d'hydrolysats d'amidon ou d'hydrolysats de matières ligno-cellulosiques, notamment d'hémicellulose, en particulier de xylanes et xyloglucanes, de préférence dans le groupe constitué de xylitol, maltitol, sorbitol et produits d'hydrogénation d'hydrolysats d'amidon ou de matières ligno-cellulosiques. Parmi ces sucres hydrogénés, le maltitol (qui comporte trois fonctions hydroxyle primaires) est particulièrement préféré.

Les hydrolysats d'amidon sont des produits obtenus par hydrolyse enzymatique et/ou acide d'amidon.

Les hydrolysats d'amidon préférés ont avantageusement, avant l'étape d'hydrogénation, un équivalent dextrose (DE) compris entre 10 et 99, de préférence entre 15 et 80.

Le rapport en poids du sucre hydrogéné à l'acide citrique est avantageusement compris entre 0,2 et 1,0, de préférence entre 0,3 et 0,9, plus préférentiellement entre 0,4 et 0,8.

Le sucre hydrogéné, l'acide citrique et le polysaccharide (amidon fonctionnalisé/dextrine) sont les principaux constituants des compositions de liant de la présente invention. Ensemble ils représentent au moins 70 %, de préférence au moins 75 %, et idéalement au moins 80 % du poids sec de la composition de liant avant réticulation.

Le polysaccharide utilisé pour le renforcement des performances mécaniques à l'état humide doit être soluble et dissous dans la composition aqueuse de liant. La solubilité du polysaccharide est obtenue par fonctionnalisation d'un amidon ou par dextrinisation d'un amidon. La solubilité de l'amidon dextrinisé ou fonctionnalisé n'est pas nécessairement totale et une partie limitée de l'amidon peut rester sous forme finement dispersée dans la composition de liant. Un polysaccharide (amidon fonctionnalisé ou dextrinisé) est considéré comme dissous/soluble dans la composition de liant lorsque, à 20 °C, la majeure partie, c'est-à-dire plus de 50% en poids du polysaccharide, de préférence plus de 70 % en poids et idéalement plus de 90 % en poids, est à l'état dissous. Si nécessaire, la solubilisation peut être obtenue par chauffage d'une dispersion aqueuse du polysaccharide, notamment par chauffage dans un autoclave à une température comprise entre 110 °C et 130 °C, suivi du refroidissement à température ambiante.

Les teneurs en polysaccharide de la composition de liant sont celles de la fraction totale comprenant la fraction dissoute et la fraction dispersée.

Les dextrines de masse élevée et au moins partiellement hydrosolubles sont connues et décrites dans la demande internationale WO2013/072639.

Elles présentent une masse molaire moyenne en poids comprise entre 150 000 et 2 000 000, de préférence entre 250 000 et 2 000 000. Cette masse moléculaire moyenne en poids est exprimée en daltons (Da) et peut être déterminée par chromatographie d'exclusion par la taille couplée à un dispositif de diffusion de la lumière (HPSEC-MALLS).

Pour cela la dextrine est totalement solubilisée par chauffage à une température de 100 °C pendant 30 minutes dans un solvant constitué d'une solution de 0,1 M de $NaNO_3$ dans du DMSO, la concentration de dextrine étant comprise entre 2 et 10 mg/ml de solvant. On utilise un appareil de chromatographie liquide haute performance (HPLC) muni d'une pompe fonctionnant en mode isocratique, faisant circuler un solvant d'élution (solution aqueuse de nitrate de sodium à 0,1 M contenant 0,02 % en masse d'azoture de sodium) à un débit de 0,3 mL/min. L'appareil est en outre muni d'un détecteur réfractométrique et d'un détecteur de diffusion de lumière laser sous multiples angles (MALLS), par exemple un détecteur DAWN DSP de la société Wyat, chauffé à 35 °C. La colonne est une colonne Suprema de polyhydroxyméthacrylate thermostatée à 35 °C. Le volume d'injection est de 100$\mu$L.

Les masses moléculaires moyennes en poids et en nombre peuvent être déterminées à partir des spectres obtenus en retraitant les spectres en exponentiel du 1$^{er}$ ordre, à l'aide du logiciel d'analyse ASTRA v.4.

La solubilité des dextrines est déterminée selon le test A comprenant les étapes suivantes :

- prélèvement d'une masse de prise d'essai ($m_{prise\ essai}$) d'environ 5,0 g de dextrine, cette masse étant exprimée en masse sèche,
- dispersion de la masse de prise d'essai dans 200 mL d'eau à 22°C dans un Erlenmeyer, qui est ensuite placé à 22°C au bain-marie pendant 4 heures sous agitation magnétique avec une agitation de 5 minutes toutes les 30 minutes ;
- filtrage du contenu du flacon sur un filtre de porosité 8 pm, par exemple de type Whatman 2 V ;
- pipetage de 50 mL de filtrat et introduction de cette quantité dans un cristallisoir sec et taré ;
- évaporation de l'eau du cristallisoir par chauffage à 60°C pendant 45 minutes, puis à 130°C pendant 90 minutes ;
- après refroidissement dans un dessiccateur, peser la masse sèche de dextrine obtenue ($m_{extrait\ sec}$).

La solubilité est calculée de la façon suivante :

$$Solubilité = (m_{extrait\ sec} \times 200 \times 100)/(50 \times m_{prise\ essai})$$

La masse sèche de la prise d'essai est calculée selon la norme ISO 1666:1996.

Les dextrines utilisées dans l'invention présentent avantageusement un indice de polydispersité supérieur à 5, de préférence supérieur à 10, et plus préférentiellement encore supérieur à 15.

La solubilité des dextrines, déterminée selon le test A décrit ci-dessus, est de préférence comprise entre 55 et 65 %.

Leur masse moléculaire moyenne en poids est de préférence comprise entre 380 000 Da et 1 400 000 Da.

Les amidons fonctionnalisés utilisables dans la composition aqueuse de liant de la présente invention sont de préférence choisis dans le groupe constitué des amidons éthérifiés et des amidons estérifiés, en particulier des amidons acétylés et amidons hydroxyalkylés, tels que les hydroxyéthylamidons et hydroxypropylamidons. Les amidons acétylés sont particulièrement préférés.

Leur masse moléculaire moyenne en poids est de préférence comprise entre 150 000 et 2 000 000.

Leur taux de fonctionnalisation doit être suffisant pour permettre la dissolution de l'amidon dans de l'eau par chauffage dans un autoclave. L'amidon reste généralement au moins partiellement soluble dans l'eau après retour à la température ambiante.

Dans le cadre de ses essais visant à mettre au point des compositions de liant permettant de conférer aux voiles non-tissés une résistance en traction élevée, en particulier à l'état humide, les inventeurs ont découvert par ailleurs deux types de composés qui permettaient d'améliorer encore davantage les performances du produit final.

Le premier type de composé est un polycarbodiimide, à savoir un composé comportant au moins deux, de préférence au moins trois fonctions carbodiimide (-N=C=N-). Ce composé augmente probablement la densité de réticulation du système thermodurcissable en réagissant avec les fonctions carboxyle de l'acide citrique. Les compositions de liant de la présente invention contiennent avantageusement de 4 à 20 % d'un polycarbodiimide, ce pourcentage étant exprimé par rapport au poids total de sucre hydrogéné, d'acide citrique et de polysaccharide.

On peut indiquer comme exemples de polycarbodiimides utilisables dans la présente invention les produits commerciaux Permutex® XR-5508 et Permutex® XR-13-554 commercialisés par la société Stahl.

Le deuxième type de composé permettant d'améliorer encore davantage la résistance en traction des voiles non-tissés est choisi parmi les polyols (alcool polyhydriques) de faible masse, généralement inférieure à 500, comportant au moins trois fonctions, généralement de 3 à 6 fonctions hydroxyle primaires.

On peut citer à titre d'exemples de tels polyols le triméthylolpropane, le triméthylolbutane, le pentaéryhtritol, le dipentaérhythritol, la triéthanolamine et les poly-bêta-hydroxyalkylamides. Les poly-bêta-hydroxyalkylamides sont particulièrement préférés.

Dans un mode de réalisation préféré, la composition de liant de la présente invention comprend de 4 à 20 % d'un polyol ayant une masse moléculaire inférieure à 500 et comportant de 3 à 6 fonctions d'alcool primaire, ce pourcentage étant exprimé par rapport au poids total de sucre hydrogéné, d'acide citrique et de dextrine.

La préparation des compositions de liant de la présente invention est généralement assez simple.

Lorsque le polysaccharide est une dextrine, il est préférable de dissoudre d'abord la dextrine dans une quantité suffisante d'eau et d'ajouter ensuite le sucre hydrogéné, l'acide citrique et le catalyseur. Il n'est généralement pas nécessaire de chauffer la composition.

Lorsque le polysaccharide est un amidon fonctionnalisé non soluble à froid, il est recommandé de le disperser d'abord dans de l'eau et de chauffer ensuite la dispersion dans un autoclave (par exemple chauffage d'une dispersion aqueuse à 20 % d'amidon pendant 2 heures à une température de 130 °C). La majeure partie de l'amidon ainsi solubilisé reste soluble dans l'eau après refroidissement à température ambiante.

La composition de liant de la présente invention, au moment où elle est appliquée sur le mat non tissé a avantageusement une teneur en matières solides comprise entre 5 et 20 %, de préférence entre 8 et 15 % en poids.

Elle peut contenir, en plus des quatre ou cinq ingrédients décrits ci-dessus des additifs connus, tels que des agents de couplage, par exemple des aminosilanes ou époxysilanes, des silicones réactives ou non.

La présente demande a également pour objet un procédé de fabrication d'un voile non-tissé de fibres minérales et/ou de fibres organiques, comprenant

- l'application d'une composition aqueuse de liant telle que décrite ci-dessus sur un ensemble de fibres minérales ou organiques rassemblées sous forme d'un voile non-tissé, et
- le chauffage du voile non-tissé de fibres minérales ou organiques enduit de la composition de liant à une température suffisante et pendant une durée suffisante pour effectuer la réticulation de la composition de liant et la formation d'un liant réticulé insoluble et infusible.

Les fibres minérales du voile non-tissé sont de préférence des fibres de verre.

Les fibres minérales peuvent être des filaments ou des fils composés d'une multitude de filaments et des assemblages de tels fils.

Ainsi, selon un premier mode de réalisation, le mat de fibres minérales est composé de filaments minéraux discontinus de longueur pouvant atteindre 150 mm, de préférence compris entre 20 et 100 mm et avantageusement entre 50 et 70 mm, et ayant un diamètre qui peut varier dans une large mesure, par exemple de 5 à 30 $\mu$m.

Selon un deuxième mode de réalisation, le mat de fibres minérales est composé de fils minéraux.

Les fils minéraux peuvent être des fils composés d'une multitude de filaments minéraux (ou fils de base) ou des assemblages de ces fils de base en stratifils (*rovings*).

Les fils précités peuvent être des fils sans torsion ou des fils retordus (ou fils textiles), de préférence sans torsion.

Les fils minéraux, notamment de verre, sont généralement coupés à une longueur pouvant aller jusqu'à 100 mm, de préférence comprise entre 6 et 30 mm, en particulier entre 8 et 20 mm et mieux encore de 10 à 18 mm.

Le diamètre des filaments de verre constituant les fils peut varier dans une large mesure, par exemple de 5 à 30 $\mu$m. De la même manière, de larges variations peuvent survenir dans la masse linéique du fil qui peut aller de 34 à 1500 tex.

Le verre constituant les filaments peut être de tout type, par exemple C, E, R ou AR (résistant aux alcalins). On préfère le verre C et E.

Les fibres organiques sont de préférence des fibres en polyester, en particulier en poly(éthylène téréphtalate), étirées. Elles peuvent être pleines ou creuses. De préférence au moins une partie des fibres organiques sont des fibres recyclées. On utilisera de préférence des fibres courtes (en anglais staple fibers), ayant une longueur allant de 30mm à 120mm et un titre compris entre 1,5 et 7 den.

Bien entendu, le voile non-tissé de la présente invention peut contenir un mélange de fibres minérales et organiques, en particulier un mélange de fibres de verre et de fibres en polyester.

De manière connue, on dépose la composition de liant sur le mat de fibres, formé par voie sèche ou voie humide, puis le mat est traité à une température permettant la réticulation du liant qui devient alors infusible.

La réticulation de la composition de liant selon l'invention se fait avantageusement par chauffage à une température comprise entre 180 et 230°C, de préférence entre 190 et 220 °C, et pendant une durée comprise entre 10 secondes et 2 minutes, de préférence entre 15 secondes et 1 minute.

Enfin, la présente demande a également pour objet un voile non-tissé susceptible d'être obtenu par le procédé décrit ci-avant.

Ce voile non-tissé présente avantageusement une perte au feu (*loss on ignition,* LOI) comprise entre 10 et 40 % en poids, de préférence entre 15 et 35 % en poids, encore plus préférentiellement entre 20 et 30 % en poids.

Sa masse surfacique est avantageusement comprise entre 25 et 400 g/m$^2$, de préférence entre 30 et 250 g/m$^2$

et plus préférentiellement entre 35 - 150 g/m$^2$.

Exemples

On prépare des compositions aqueuses de liant comprenant les ingrédients indiqués au tableau 1 ci-après.

**Composition comparative A (absence de polysaccharide)**

On dissout du maltitol dans de l'eau, puis on ajoute à la solution obtenue de l'acide citrique et de l'hypophosphite de sodium (HPS). Après dissolution complète des ingrédients on dilue jusqu'à une teneur en matières sèches de 10 %.

**Composition comparative B (polysaccharide = maltodextrine)** :

On dissout une maltodextrine ayant un équivalent dextrose (DE) d'environ 16,5 à 19,5 dans de l'eau, puis on ajoute du maltitol, de l'acide citrique et du HPS et on agite à température ambiante jusqu'à dissolution de l'ensemble des ingrédients. Après dissolution complète des ingrédients, on ajuste la teneur en matières sèches de la composition à 10 % en poids.

**Composition 1 (selon l'invention)**

On dissout/disperse dans de l'eau à température ambiante une dextrine partiellement soluble ayant une masse molaire moyenne en poids de 200 000 Da commercialisée sous la dénomination Stabilys® LAB 4511. On ajoute ensuite du maltitol, de l'acide citrique et du HPS. Après dissolution de ces ingrédients, on ajuste la teneur en matières sèches de la composition à 12 % en poids.

**Composition 2 (selon l'invention)**

On dissout/disperse dans de l'eau à température ambiante une dextrine partiellement soluble ayant une masse molaire moyenne en poids de 200 kDa commercialisée sous la dénomination Stabilys® LAB 4511. On ajoute à la solution de dextrine, du maltitol, de l'acide citrique, du HPS et, en tant qu'agent réticulant supplémentaire, un polycarbodiimide (Permutex® XR13-554 commercialisé par la société Stahl). On ajuste la teneur en matières solides à 9 % en poids.

**Composition 3 (selon l'invention)**

On dissout/disperse dans de l'eau à température ambiante une dextrine partiellement soluble ayant une masse molaire moyenne en poids de 200 kDa commercialisée sous la dénomination Stabilys® LAB 4511. On ajoute à la solution de dextrine, du maltitol, de l'acide citrique, du HPS et, en tant qu'agent réticulant supplémentaire, un bêta-hydroxyalkylamide (Primid® XL-552 commercialisé par la société EMS Chemie). On ajuste la teneur en matières solides à 11 % en poids.

**Composition 4 (selon l'invention)**

Un amidon acétylé (Tackidex G076 commercialisé par la société Roquette) est dissous dans de l'eau par chauffage dans un autoclave (130°C, 2 bars, extrait sec de 21%), puis, après refroidissement à température ambiante, on ajoute du maltitol, de l'acide citrique et du HPS. Après dissolution de l'ensemble des ingrédients, on ajuste la teneur en matières sèches de la composition à 9 % en poids.

Les ingrédients des différentes compositions comparatives et selon l'invention ainsi que leurs quantités respectives sont rassemblés au Tableau 1 ci-dessous. Les quantités sont exprimées en % par rapport au poids sec de la composition.

[Tableau 1]

| Composition | maltitol | Acide citrique | polysaccharide | réticulant | HPS |
|---|---|---|---|---|---|
| A | 31,8 | 63,5 | - | - | 4,7 |
| B | 21,9 | 43,8 | 29,6 (maltodextrine) | - | 4,7 |
| 1 | 21,9 | 43,8 | 29,6 (Stabilys LAB4511) | - | 4,7 |

(suite)

| Composition | maltitol | Acide citrique | polysaccharide | réticulant | HPS |
|---|---|---|---|---|---|
| 2 | 19,4 | 38,8 | 28,8 (Stabilys LAB4511) | 8,8 | 4,7 |
| 3 | 18,5 | 36,8 | 27,5 (Stabilys LAB4511) | 13,2 | 4,0 |
| 4 | 21,9 | 43,8 | 29,6 (Tackidex G076) | - | 4,7 |

On utilise les compositions A, B et 1 - 4 pour la fabrication de voiles non-tissés. Pour cela, on applique sur un voile non-tissé en fibres de verre ayant un poids surfacique de 35 g/m$^2$ chacune des compositions du Tableau 1 par immersion de ce voile dans les solutions précédentes.

Après application de la composition de liant, le voile imprégné est chauffé pendant 60 secondes à une température de 210°C.

A partir des voiles ainsi obtenus, des échantillons de 30 cm × 5 cm sont découpés à l'emporte-pièce afin de réaliser des mesures de résistance en traction. La résistance en traction à sec est déterminée par la mesure de la force à la rupture en traction uniaxiale (100mm/min, longueur utile de 20cm) des échantillons juste après cuisson.

La résistance en traction à l'état humide, est déterminée de la même manière sur des échantillons qui ont séjourné pendant 10 minutes dans de l'eau à 80°C.

Le tableau 2 montre les résistances en traction à sec et à l'état humide pour l'ensemble des voiles obtenus. Chaque résultat est une moyenne calculée à partir de 12 échantillons, prélevés dans un même voile.

[Tableau 2]

| Composition | polysaccharide | LOI (%) | Poids surfacique (g/m$^2$) | Résistance en traction à sec (N/5cm) | Résistance en traction humide (N/5cm) |
|---|---|---|---|---|---|
| A | - | 22,7±0,7 | 35,0 | 73,4±13,1 | 24,3±6,6 |
| B | maltodextrine | 27,1±1,5 | 37,2 | 108,5±16,1 | 29,1±8,1 |
| 1 | Stabilys LAB4511 | 26,5±4,9 | 37,1 | 109,1±25,6 | 50,0±12,3 |
| 2 | Stabilys+polycarbodiimide | 22,6±0,9 | 34,4 | 100,6±9,5 | 60,9±7,5 |
| 3 | Stabilys+hydroxyalkylamide | 22,7±2,0 | 34,6 | 105,3±14,7 | 65,5±6,4 |
| 4 | Tackidex | 24,5±1,3 | 36,1 | 125,8±17,5 | 39,5±5,2 |

On peut constater que l'ajout d'une dextrine de haut poids moléculaire partiellement soluble dans l'eau (Stabilys LAB4511) permet d'obtenir des voiles présentant une résistance en traction à l'état humide deux fois plus importante.

L'ajout d'un polycarbodiimide ou d'un alcool polyhydrique (beta hydroxyalkylamide comportant quatre fonctions OH) augmente encore davantage cette résistance en traction à l'état humide.

Une maltodextrine de faible poids moléculaire par contre (Composition B) n'apporte pas d'amélioration significative de la résistance en traction.

L'utilisation d'un amidon fonctionnalisé (Tackidex G076) apporte une amélioration moins spectaculaire que celle d'une dextrine de haut poids moléculaire partiellement solubles dans l'eau à température ambiante.

**Revendications**

1. Composition aqueuse de liant comprenant

- de 10 à 40 % en poids d'un sucre hydrogéné,
- de 25 à 55 % en poids d'acide citrique,
- de 25 à 50 % en poids d'un polysaccharide, dissous dans la composition aqueuse de liant, choisi dans groupe constitué des dextrines présentant une masse molaire moyenne en poids comprise entre 150 000 et 2 000 000 et une solubilité dans l'eau comprise entre 50 et 85 % et des amidons fonctionnalisés, et
- de 1 à 10 % en poids, de préférence de 2 à 6 % en poids d'hypophosphite de sodium ou d'acide hypophosphoreux,

ces pourcentages étant exprimés par rapport au poids sec total de la composition de liant.

2.  Composition aqueuse de liant selon la revendication 1, **caractérisée par le fait que** le sucre hydrogéné, l'acide citrique et le polysaccharide représentent ensemble au moins 70 %, de préférence au moins 75 %, et idéalement au moins 80 % du poids sec de la composition de liant.

3.  Composition aqueuse de liant selon la revendication 1 ou 2, dans lequel le sucre hydrogéné est choisi dans le groupe constitué de l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon ou de matières ligno-cellulosiques, de préférence dans le groupe constitué de xylitol, maltitol, sorbitol et produits d'hydrogénation d'hydrolysats d'amidon ou de matières ligno-cellulosiques.

4.  Composition aqueuse de liant selon l'une des revendications précédentes, **caractérisée par le fait que** les amidons fonctionnalisés sont choisis dans le groupe constitué des amidons éthérifiés et des amidons estérifiés, en particulier des amidons acétylés et des amidons hydroxyalkylés.

5.  Composition aqueuse de liant selon l'une des revendications précédentes, **caractérisée par le fait que** le rapport en poids du sucre hydrogéné à l'acide citrique est compris entre 0,2 et 1,0, de préférence entre 0,3 et 0,9, plus préférentiellement entre 0,4 et 0,8.

6.  Composition aqueuse de liant selon l'une quelconque des revendications précédentes, **caractérisée par le fait qu'**elle contient en outre de 4 à 20 % d'un polycarbodiimide, ce pourcentage étant exprimé par rapport au poids total de sucre hydrogéné, d'acide citrique et de polysaccharide.

7.  Composition aqueuse de liant selon l'une quelconque des revendications précédentes, **caractérisée par le fait qu'**elle contient en outre de 4 à 20 % d'un polyol ayant une masse moléculaire inférieure à 500, comportant de 3 à 6 fonctions d'alcool primaire, ce pourcentage étant exprimé par rapport au poids total de sucre hydrogéné, d'acide citrique et de de polysaccharide.

8.  Composition aqueuse de liant selon l'une quelconque des revendications précédentes, **caractérisée par le fait qu'**elle a une teneur en matières solides comprise entre 5 et 20 %, de préférence entre 8 et 15 % en poids.

9.  Procédé de fabrication d'un voile non-tissé de fibres minérales et/ou de fibres organiques, comprenant

    - l'application d'une composition aqueuse de liant selon l'une quelconque des revendications précédentes sur un ensemble de fibres minérales et/ou organiques rassemblées sous forme d'un voile non-tissé, et
    - le chauffage du voile non-tissé de fibres minérales et/ou organiques enduit de la composition de liant à une température suffisante et pendant une durée suffisante pour effectuer la réticulation de la composition de liant et la formation d'un liant réticulé insoluble et infusible.

10. Procédé de fabrication selon la revendication 9, **caractérisé par le fait que** la température de chauffage est comprise entre 180 °C et 230 °C et que la durée de chauffage est comprise entre 10 secondes et 2 minutes.

11. Voile non-tissé de fibres de verre susceptible d'être obtenu par le procédé selon l'une quelconque des revendications 9 et 10.

12. Voile non-tissé selon la revendication 11, **caractérisé par le fait qu'**il présente une perte au feu (LOI) comprise entre 10 et 40 % en poids.

13. Voile non-tissé de fibres de verre selon la revendication 11 ou 12, **caractérisé par le fait qu'**il présente une masse surfacique comprise entre 25 et 400 g/m$^2$.


**Patentansprüche**

1.  Wässrige Bindemittelzusammensetzung, umfassend

    - 10 bis 40 Gew.-% eines hydrierten Zuckers,

- 25 bis 55 Gew.-% Zitronensäure,
- 25 bis 50 Gew.-% eines in der wässrigen Bindemittelzusammensetzung gelösten Polysaccharids, ausgewählt aus der Gruppe bestehend aus Dextrinen mit einer gewichtsmittleren Molmasse zwischen 150.000 und 2.000.000 und einer Wasserlöslichkeit zwischen 50 und 85 % und funktionalisierten Stärken, und
- 1 bis 10 Gew.-%, vorzugsweise von 2 bis 6 Gew.-% Natriumhypophosphit oder hypophosphorige Säure, wobei diese Prozentsätze relativ zum Gesamttrockengewicht der Bindemittelzusammensetzung sind.

2. Wässrige Bindemittelzusammensetzung nach Anspruch 1, **dadurch gekennzeichnet, dass** der hydrierte Zucker, die Zitronensäure und das Polysaccharid zusammen mindestens 70 %, vorzugsweise mindestens 75 % und idealerweise mindestens 80 % des Trockengewichts der Bindemittelzusammensetzung ausmachen.

3. Wässrige Bindemittelzusammensetzung nach Anspruch 1 oder 2, wobei der hydrierte Zucker ausgewählt ist aus der Gruppe bestehend aus Erythritol, Arabitol, Lexylitol, Sorbitol, Mannitol, Iditol, Maltitol, Isomaltitol, Lactitol, Cellobitol, Palatinitol, Maltotritol und Hydrierungsprodukte von Stärkehydrolysaten oder lignozellulosehaltigen Materialien, vorzugsweise aus der Gruppe bestehend aus Xylitol, Maltitol, Sorbitol und Hydrierungsprodukten von Stärkehydrolysaten oder Lignocellulosematerialien.

4. Wässrige Bindemittelzusammensetzung nach einem der vorstehenden Ansprüche, **dadurch gekennzeichnet, dass** die funktionalisierten Stärken ausgewählt sind aus der Gruppe bestehend aus veretherten Stärken und veresterten Stärken, insbesondere acetylierten Stärken und hydroxyalkylierten Stärken.

5. Wässrige Bindemittelzusammensetzung nach einem der vorstehenden Ansprüche, **dadurch gekennzeichnet, dass** das Gewichtsverhältnis von hydriertem Zucker zu Zitronensäure zwischen 0,2 und 1,0, vorzugsweise zwischen 0,3 und 0,9, mehr bevorzugt zwischen 0,4 und 0,8, liegt.

6. Wässrige Bindemittelzusammensetzung nach einem der vorstehenden Ansprüche, **dadurch gekennzeichnet, dass** sie ferner 4 bis 20 % eines Polycarbodiimids enthält, wobei dieser Prozentsatz relativ zum Gesamtgewicht von hydriertem Zucker, Zitronensäure und Polysaccharid ist.

7. Wässrige Bindemittelzusammensetzung nach einem der vorstehenden Ansprüche, **dadurch gekennzeichnet, dass** sie ferner 4 bis 20 % eines Polyols mit einem Molekulargewicht von weniger als 500 enthält, das 3 bis 6 primäre Alkoholfunktionen aufweist, wobei dieser Prozentsatz relativ zum Gesamtgewicht von hydriertem Zucker, Zitronensäure und Polysaccharid ausgedrückt ist.

8. Wässrige Bindemittelzusammensetzung nach einem der vorstehenden Ansprüche, **dadurch gekennzeichnet, dass** sie einen Feststoffgehalt zwischen 5 und 20 Gew.-%, vorzugsweise zwischen 8 und 15 Gew.-%, aufweist.

9. Verfahren zur Herstellung eines Vlieses aus Mineralfasern und/oder organischen Fasern, umfassend

- das Aufbringen einer wässrigen Bindemittelzusammensetzung nach einem der vorstehenden Ansprüche auf eine Gruppe von mineralischen und/oder organischen Fasern, die in Form eines Vlieses zusammengeführt sind, und
- das Erwärmen des mit der Bindemittelzusammensetzung beschichteten Vlieses aus mineralischen und/oder organischen Fasern auf eine ausreichende Temperatur und für eine ausreichende Zeit, um die Vernetzung der Bindemittelzusammensetzung und die Bildung eines unlöslichen und unschmelzbaren vernetzten Bindemittels zu bewirken.

10. Herstellungsverfahren nach Anspruch 9, **dadurch gekennzeichnet, dass** die Erwärmungstemperatur zwischen 180 °C und 230 °C und die Erwärmungsdauer zwischen 10 Sekunden und 2 Minuten liegt.

11. Glasfaservlies, das durch das Verfahren nach einem der Ansprüche 9 oder 10 erhalten werden kann.

12. Vlies nach Anspruch 11, **dadurch gekennzeichnet, dass** er einen Glühverlust (LOI) zwischen 10 und 40 Gew.-% aufweist.

13. Vlies aus Glasfasern nach Anspruch 11 oder 12, **dadurch gekennzeichnet, dass** es eine flächenbezogene Masse zwischen 25 und 400 g/m² aufweist.

**Claims**

1. An aqueous binder composition comprising

   - 10 to 40% by weight of a hydrogenated sugar,
   - 25 to 55% by weight of citric acid,
   - 25 to 50% by weight of a polysaccharide, dissolved in the aqueous binder composition, chosen from the group consisting of dextrins having a weight-average molar mass of between 150,000 and 2,000,000 and a solubility in water of between 50 and 85% and functionalized starches, and
   - 1 to 10% by weight, preferably 2 to 6% by weight, of sodium hypophosphite or hypophosphorous acid, said percentages being expressed relative to the total dry weight of the binder composition.

2. The aqueous binder composition according to claim 1, **characterized by** the fact the hydrogenated sugar, citric acid and polysaccharide together represent at least 70%, preferably at least 75%, and ideally at least 80% of the dry weight of the binder composition.

3. The aqueous binder composition according to claim 1 or 2, wherein the hydrogenated sugar is chosen from the group consisting of erythritol, arabitol, xylitol, sorbitol, mannitol, iditol, maltitol, isomaltitol, lactitol, cellobitol, palatinitol, maltotritol and the hydrogenation products of starch hydrolysates or lignocellulosic materials, preferably from the group consisting of xylitol, maltitol, sorbitol and hydrogenation products of starch hydrolysates or lignocellulosic materials.

4. The aqueous binder composition according to one of the preceding claims, **characterized by** the fact that the functionalized starches are chosen from the group consisting of etherified starches and esterified starches, in particular acetylated starches and hydroxyalkylated starches.

5. The aqueous binder composition according to one of the preceding claims, **characterized by** the fact that the weight ratio of hydrogenated sugar to citric acid is between 0.2 and 1.0, preferably between 0.3 and 0.9, more preferentially between 0.4 and 0.8.

6. The aqueous binder composition according to any one of the preceding claims, **characterized by** the fact that it further contains 4 to 20% of a polycarbodiimide, this percentage being expressed relative to the total weight of hydrogenated sugar, citric acid and polysaccharide.

7. The aqueous binder composition according to any one of the preceding claims, **characterized by** the fact that it further contains 4 to 20% of a polyol having a molecular mass of less than 500, having from 3 to 6 primary alcohol functions, this percentage being expressed relative to the total weight of hydrogenated sugar, citric acid and polysaccharide.

8. The aqueous binder composition according to any one of the preceding claims, **characterized by** the fact that it has a solids content of between 5 and 20%, preferably between 8 and 15% by weight.

9. A method for manufacturing a non-woven web of mineral fibers and/or organic fibers, which comprises

   - applying an aqueous binder composition according to any one of the preceding claims to a set of mineral and/or organic fibers gathered in the form of a non-woven web, and
   - heating the non-woven web of mineral and/or organic fibers coated with the binder composition to a sufficient temperature and for a sufficient duration to carry out the cross-linking of the binder composition and the formation of an insoluble and infusible cross-linked binder.

10. The manufacturing method according to claim 9, **characterized by** the fact that the heating temperature is between 180°C and 230°C and the heating time is between 10 seconds and 2 minutes.

11. A non-woven glass-fiber web capable of being obtained by the method according to any one of claims 9 and 10.

12. The non-woven web according to claim 11, **characterized by** the fact that it has a loss on ignition (LOI) of between 10 and 40% by weight.

13. The non-woven glass-fiber web according to claim 11 or 12, **characterized by** the fact that it has a mass per unit area of between 25 and 400 g/m$^2$.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007014236 A
- WO 2009019232 A
- WO 2010029266 A
- WO 2013014399 A
- WO 2013072639 A